# DEMANDE DE BREVET EUROPEEN

(11) **EP 4 733 286 A1**
(43) Date de publication de la demande: **29.04.2026**
(21) Numéro de dépôt: 24306769.1
(22) Date de dépôt: 22.10.2024
(51) Int. Cl.: C04B 28/12, C04B 18/24

(54) **LIANT A BASE DE CHAUX HYDRAULIQUE NATURELLE POUR BETON ET MORTIER COMPOSES DE GRANULATS VEGETAUX**

(71) Demandeur: Chaux de Saint Astier, 24110 Saint-Astier (FR)
(72) Inventeur: SALESSES, Bernard, 24110 SAINT-ASTIER (FR); COLLET, Romain, 24110 SAINT-ASTIER (FR); TANGUY, Mathieu, 24110 SAINT-ASTIER (FR)
(74) Mandataire: Santarelli

(57) **Abrégé**

La présente invention concerne une nouvelle composition de liant hydraulique écologique pour des matériaux de granulats végétaux, comme le béton de chanvre. La composition de l'invention intègre une très haute teneur de chaux hydraulique naturelle tout en garantissant des propriétés mécaniques optimales. L'invention propose notamment d'optimiser les performances mécaniques par l'utilisation d'un mélange de sulfate de calcium et de ciment alumineux. Le temps de prise et de durcissement des matériaux sont aussi nettement réduits, ce qui permet d'accélérer la fabrication des matériaux à granulats végétaux.

## Description

### DOMAINE TECHNIQUE DE L'INVENTION

La présente invention concerne le domaine des liants pour les bétons, mortiers et enduits à base de granulats végétaux. Plus particulièrement, l'invention concerne un liant à base de chaux hydraulique naturelle pour du béton ou enduit de chanvre ou tout autre granulat végétal.

L'invention trouve notamment une application dans la fabrication de béton de chanvre, préfabriqué ou appliqué par banchage et projection.

### ETAT DE LA TECHNIQUE

Le béton de chanvre, est un matériau de construction écologique et durable. Il est fabriqué en mélangeant de la chènevotte (la partie ligneuse de la tige de chanvre) avec un liant, généralement de la chaux, du ciment naturel ou de l'argile. Ce mélange crée un matériau isolant thermiquement et acoustiquement, ainsi que perspirant. Des matériaux avec des caractéristiques similaires peuvent être également fabriqués avec d'autres granulats végétaux tels que des copeaux de bois, les anas de lin, de miscanthus, les fibres de coco, etc.

Bien que le béton de chanvre offre de nombreux avantages, il présente également quelques défis spécifiques dans son utilisation. Par exemple, son temps de séchage est assez long et peut générer des délais et des contraintes supplémentaires dans le processus de construction. Il est également essentiel de veiller aux propriétés mécaniques du mélange qui sont affaiblies en présence du chanvre, ainsi que de tout autre granulat végétal. Il est donc important de vérifier la résistance mécanique, le temps de prise et la cinétique de durcissement de ces matériaux.

La composition des liants pour le béton de chanvre est un aspect essentiel qui influence les propriétés mécaniques, thermiques et environnementales du matériau final. D'un point de vue écologique, les quantités de ciment Portland ou de chaux hydraulique (HL) (qui peut inclure du ciment) doivent être limitées. Les liants à utiliser idéalement dans le béton de chanvre sont des matériaux naturels qui s'intègrent bien avec le chanvre, comme la chaux hydraulique naturelle (NHL) ou l'argile. Toutefois, ces dernières ne garantissent pas une résistance mécanique à jeune âge du béton de chanvre suffisante pour certaines applications.

La demande de brevet internationale WO 2015/082513 A1 donne des exemples des bétons et mortiers de matériaux végétaux à base de chaux aériennes. Il est fait état de la problématique du caractère hydrophile des agrégats végétaux résultant dans l'augmentation d'eau nécessaire dans les mélanges, et de l'augmentation de son temps de prise et de séchage. Il est également mentionné que les agrégats végétaux libèrent des molécules organiques interagissant de manière indésirable avec le liant minéral, et retardent ainsi la prise de ce dernier. Ce document propose des formules de liant optimisées pour pallier aux effets indésirables des agrégats végétaux. Ces compositions sont à base de chaux aériennes de surface spécifique augmentée incorporant environ 40% de ciment Portland.

La demande de brevet internationale WO 03/004435 traite également sur les bétons et mortiers de chanvre, et propose des compositions de liant comportant de 50 à 80% en masse de chaux aérienne, et de 10 à 70% de liant hydraulique tel que du ciment et la chaux hydraulique, et éventuellement 5 à 10 % du poids de charges pouzzolaniques de type cendres volcaniques. En particulier, les compositions sont optimisées pour permettre le séchage et la prise en masse de la chaux aérienne. Les compositions sont aussi optimisées pour pallier aux inconvénients du relargage d'eau par la matière organique. A ces fins, les compositions sont additionnées également d'un adjuvant de formation de pores et capillaires aidant à évacuer l'eau jusqu' en surface du matériau. D'autre part, il est également suggéré de rajouter un adjuvant hydrophobant ou un agent tensioactif pour limiter la réabsorption d'humidité par le chanvre. Toutefois, ce document ne donne aucun exemple précis de composition ni précise le temps de séchage des dites compositions. Une présence importante de ciment est présumée pour la fabrication des matériaux garantissant des bonnes performances mécaniques.

Or, la production du ciment Portland est énergivore et génère d'importantes émissions de dioxyde de carbone. L'utilisation de ciment Portland est donc déplorable dans un éco-matériau, et il est souhaité de diminuer au plus possible sa présence dans les compositions de liant sans pour autant compromettre les performances mécaniques de ces dernières. De plus, sa présence donne un couleur gris béton d'aspect peu naturel.

La demande de brevet EP 2 263985 A1 décrit un liant pour un matériau composite de construction incorporant du chanvre, ledit liant étant formulé à base de chaux hydraulique et du métakaolin. La formule intègre également des adjuvants tels qu'un durcisseur hydrofuge réducteur de retrait comme le carbonate de glycérol, et/ou un entraineur d'air. Un matériau composite présentant des bonnes propriétés de résistance mécaniques peut être obtenu lorsque ledit liant est mélangé à des granulats de chanvre présents à hauteur de 15 à 30 % en masse sèche de liant, avec un rapport eau/liant compris entre 0,5 et 1,5. Ces compositions ne présentent pas de ciment Portland et présentent des bonnes propriétés mécaniques. Ces compositions peuvent toutefois être optimisées quant à son temps de prise et de séchage.

### RESUME DE L'INVENTION

La présente concerne une nouvelle composition de liant écologique à haute teneur en chaux hydraulique naturelle pour la préparation des matériaux aux bétons et mortiers de granulats végétaux.

L'invention propose notamment une composition de liant hydraulique pour des bétons ou mortiers de granulats végétaux comprenant :
- une première partie dite « A » de liant hydraulique comportant en masse sèche au moins 75% de chaux hydraulique naturelle sur un poids total de ladite partie A, de préférence au moins 85% de chaux hydraulique naturelle, et
- une deuxième partie dite « B » constituée d'un mélange de sulfate de calcium et de ciment alumineux,
et dans laquelle la partie A de liant hydraulique représente au moins 70% en masse sèche sur un poids total de la composition de liant.

Cette composition permet d'obtenir un liant écologique à très haute concentration de chaux hydraulique naturelle, tout en garantissant des bonnes propriétés de résistance mécanique à jeune âge et long terme, ainsi qu'un aspect visuel naturel. En effet, la partie B de la composition permet de maitriser les propriétés mécaniques du liant et des matériaux de granulats végétaux sans nécessiter obligatoirement l'utilisation du ciment Portland, et sans besoin des adjuvants ou traitements supplémentaires pour palier au relargage d'eau et autres molécules par les granulats végétaux.

Avantageusement, un ratio massique « A/B » dans la composition est compris entre 2,3 et 8, de préférence entre 4 et 6. Ce ratio permet d'optimiser les propriétés mécaniques d'une composition à haute teneur en chaux hydraulique naturelle. De préférence, la concentration massique totale de ciment Portland dans la composition de liant est ≤ à 10 %, de préférence ≤ à 5 %. De préférence, le ciment sera conforme à la norme NF EN 197-1, et sera choisi parmi les ciments de classe CEM I 52.5 N ou CEM I 52.5 R.

Un autre objectif de l'invention est d'optimiser le temps de prise et de séchage des matériaux aux granulats végétaux fabriqués avec le liant hydraulique de l'invention.

A cette fin, l'invention propose d'ajuster un ratio massique sulfate de calcium/ciment alumineux dans la composition de 0,3 à 0,7.

L'invention propose également d'inclure un accélérateur dans la composition choisi parmi un sel métallique alcalin tel que le carbonate de lithium, le sulfate de lithium, le carbonate de sodium, le sulfate de sodium, le sulfate de potassium, et le carbonate de potassium. Le temps de prise et durcissement est ainsi amélioré.

De même, la combinaison dans la composition de l'accélérateur de prise et du ratio massique de sulfate de calcium/ciment alumineux permet de garantir un temps de prise inférieur à 16h, et un durcissement permettant la préfabrication de pièces en béton de chanvre et un démoulage en moins de 24h, et ceci même à des basses températures (inférieures à 10°C et supérieures ou égales à 5°C). L'accélérateur de prise sera présent dans une concentration de 0,05 à 2% en masse sèche sur le poids total de la composition, de préférence de 0,1 à 1%. Dans un mode de réalisation préféré, l'accélérateur de prise est le sulfate de sodium, ce dernier étant très efficace à faible concentration, notamment à partir de 0,1% ou 0,2 % selon les tests réalisés.

De préférence, la partie A de la composition est constituée en masse sèche d'au moins 85% de chaux hydraulique naturelle et de 0 à 15 % de ciment Portland sur le poids total de ladite partie A, et de préférence d'au moins 90% de chaux hydraulique naturelle et de 0 à 10% de ciment Portland.

La composition de liant hydraulique peut être notamment formulée avec les caractéristiques ci-après :
- la partie A est constituée en masse sèche d'au moins 90% de chaux hydraulique naturelle, et de 0 à 10% de ciment Portland sur le poids total en masse sèche de ladite première partie, et représente de préférence au moins 80% en masse sèche sur le poids total de la composition de liant,
- dans la partie B constituée du mélange de sulfate de calcium et de ciment alumineux, le ciment alumineux est choisi parmi un ciment d'aluminate de calcium CAC, un ciment sulfo-alumineux CSA ou un mélange de ces derniers,
et dans laquelle composition un ratio massique A/B est compris entre 4 et 8, de préférence entre 4 et 6 et un ratio massique de sulfate de calcium/ciment alumineux est compris entre 0,3 et 0,7, et ladite composition comprends un adjuvant accélérateur de type « sel métallique alcalin ».

Dans la préparation du liant hydraulique, la composition de l'invention est mélangée à l'eau dans un rapport massique de 0,5 à 1,5, de préférence de 1 à 1,5.

L'invention porte également sur une composition de béton, mortier ou enduit, comportant une composition de liant hydraulique selon l'invention et des granulats végétaux, tels que des granulats de chanvre, de lin, de miscanthus et du colza.

Enfin, l'invention concerne un procédé de fabrication d'un matériau composite, comportant :
- une étape de préparation d'une composition de liant selon l'une des revendications 1 à 8 mélangé à l'eau dans un rapport massique de 0,5 à 1,5, et intégrant de 15 à 80% en poids d'un granulat végétal par rapport à la masse sèche de la composition de liant.

D'autres caractéristiques et avantages de l'invention seront apparents à la lecture de la description détaillée qui suit d'un exemple non limitatif de réalisation de l'invention.

### DESCRIPTION DETAILLE DE L'INVENTION

La présente invention concerne un nouveau liant à base de chaux hydraulique naturelle pour les bétons de granulats végétaux tel que le béton de chanvre. Par « bétons de granulats végétaux » on entend au sens large tout béton, mortier ou enduit incorporant un granulat végétal comme la chènevotte de chanvre, le lin, le miscanthus, le colza, les fibres de coco etc. Le liant de l'invention est destiné à son utilisation dans la préparation des bétons des granulats végétaux appliqués, par banchage, par projection par voie sèche ou pour la fabrication par moulage des composants, tels que des blocs ou des panneaux isolants.

La chaux hydraulique naturelle (NHL) est une chaux ayant des propriétés hydrauliques produite par la calcination de calcaires plus ou moins argileux ou siliceux avec réduction en poudre par extinction, avec ou sans broyage. Elle ne contient pas d'autres matériaux ajoutés et a la propriété de faire prise et de durcir lorsqu'elle est mélangée à de l'eau, et par réaction avec le dioxyde de carbone présent dans l'air (carbonatation). La chaux hydraulique naturelle est classée en différentes catégories en fonction de sa résistance. Les classifications courantes incluent NHL 2, NHL 3.5 et NHL 5, où le nombre indique la résistance à la compression minimale après 28 jours défini selon la norme EN 459-1

En comparaison, la chaux hydraulique (HL) est un liant constitué de chaux et d'autres matériaux tels que le ciment, le laitier de haut fourneau, les cendres volantes, le filler calcaire et autres matières appropriées. La nature de la chaux peut être aérienne (CL; elle durcit sous l'effet du dioxyde de carbone) ou hydraulique (NHL), et les teneurs dans la composition de ces dernières peuvent être très variables, et parfois très faibles. En effet, les compositions de chaux hydraulique (HL) peuvent intégrer jusqu'à 50 % en masse de ciment de Portland, ce qui augmente considérablement les performances mécaniques du liant. Les compositions à base de chaux hydraulique (HL) ne garantissent pas un matériau écologique.

Un premier objectif de l'invention est donc de fournir une véritable composition de liant à haute teneur en chaux hydraulique naturelle, et à teneur réduite en ciment Portland, tout en garantissant des performances optimales en termes de résistances mécaniques par rapport aux applications visées.

Un deuxième objectif de l'invention est que le liant garantisse un temps de prise et de durcissement plus rapide du béton de chanvre que les formules existantes. En particulier, il est souhaité que ce liant permette la réalisation industrielle de composants en béton de granulats végétaux préfabriqués, et pouvant être démoulés ou changés de position à partir de 16h de prise (exemple : panneaux ou blocs isolants de béton de chanvre).

Un troisième objectif de l'invention est que la composition soit facile à mettre en oeuvre. Il est également souhaité de diminuer au maximum l'empreinte carbone du liant.

A ces fins, l'invention propose une composition de liant à haute teneur en chaux hydraulique naturelle, et dont les propriétés mécaniques et de durcissement peuvent être contrôlées par sa combinaison avec un mélange de ciment alumineux et de sulfate de calcium.

Plus particulièrement, l'invention propose une composition de liant hydraulique pour des bétons ou des mortiers de granulats végétaux comprenant :
a) Une première partie dite « A » de liant hydraulique comprenant en masse sèche au moins 75% de chaux hydraulique naturelle (NHL) conforme à la norme NF EN 459-1, sur un poids total de ladite partie A, de préférence au moins 85% de chaux hydraulique naturelle, et
b) Une deuxième partie dite « B » constitué d'un mélange de sulfate de calcium et de ciment alumineux

Avantageusement, ce mélange permet la formulation de liants à très haute teneur en chaux hydraulique naturelle, et ayant un aspect visuel très apprécié vis-à-vis de sa couleur naturelle, tout en fournissant de bonnes performances mécaniques en mélange avec des granulats végétaux. L'utilisation de ciment Portland peut ainsi être fortement diminuée, voire supprimée, et l'empreinte carbone du liant est donc significativement réduite.

La partie A est la base de la composition et représente au moins 70% en masse sèche du poids total de la composition de liant. La partie A est composé majoritairement d'une chaux hydraulique naturelle éventuellement mélangé à du ciment Portland pour renforcer les propriétés de résistance mécanique. Toutefois, le rajout d'un mélange de sulfate de calcium et de ciment alumineux (partie B) permet l'obtention des compositions sans ciment Portland, et des propriétés mécaniques optimales.

La partie B sera intégrée dans la composition selon un ratio massique A/B de 2,3 à 8, de préférence de 3 à 6 pour avoir la résistance mécanique la plus haute en absence de ciment Portland ou à très faible concentration. Dans les modes de réalisation préférés, la concentration massique totale de ciment Portland dans la composition de liant est ≤ à 5 %.

Le ciment alumineux est choisi parmi le ciment d'aluminate de calcium « CAC » et le ciment sulfo-alumineux « CSA ». Des mélanges de ces derniers peuvent être également utilisés.

Le CAC ou le CSA réagit avec le sulfate de calcium, et avec le Dihydroxyde de calcium et les C₂S de la chaux hydraulique naturelle pour former respectivement de l'ettringite (C₆A$₃H₃₂), et de la stratlingite (C₂A$H₃₂). Dans la présente invention, l'ajout de sulfate de calcium est nécessaire pour optimiser la réaction avec le ciment alumineux. En particulier, un ratio massique de sulfate de calcium/ciment alumineux dans la partie B est compris entre 0,3 et 0,7. Les principaux avantages sont un temps de prise et de développement des résistances rapides. Leur utilisation permet également de réduire l'action des espèces solubles du chanvre (hydrosoluble) qui se comportent comme des retardateurs de prise et qui ont un impact négatif sur l'hydratation des composés qui composent le liant.

Le choix du type de ciment alumineux, ainsi que sa teneur spécifique et son rapport avec le sulfate de calcium seront choisis en fonction de la résistance à la compression souhaitée, et de l'application finale en tant qu'enduit, mortier, ou béton, de son mélange à des granulats végétaux ou minéraux, ainsi que des dimensions des matériaux à fabriquer. Par exemple, le CSA contient naturellement du sulfate de calcium, le ratio massique de sulfate de calcium/ciment alumineux dans la partie B pourra donc être plus faible. Toutefois, un ajout complémentaire de sulfate de calcium est nécessaire et permet d'avoir une source libre de sulfate de calcium, plus réactive, et d'optimiser la réaction avec le CSA.

Tel qu'il a été déjà mentionné, le liant de l'invention comporte une base majoritaire de chaux hydraulique naturelle qui est incluse dans la partie A de la composition. Selon un mode de réalisation préféré, la partie A comprend ou est constituée de 90 à 100% de chaux hydraulique naturelle, et de 0 à 10 % de ciment Portland en masse sèche sur un poids total de ladite partie A.

La chaux hydraulique de la partie A est une chaux hydraulique naturelle, telle que de la NHL 2, la NHL 3.5 et la NHL5. Dans un mode de réalisation préférée de la composition, la chaux hydraulique est la NHL 3.5 et la NHL5.

La composition peut comporter également un ou plusieurs adjuvants, notamment un agent accélérateur de prise afin de garantir la prise et durcissement rapide de la composition. De préférence, l'accélérateur est choisi parmi un sel alcalin tel que le carbonate de lithium, le sulfate de lithium, carbonate de sodium, sulfate de sodium, sulfate de potassium, carbonate de potassium. L'accélérateur de prise est présent dans une concentration de 0 à 2% en masse sèche sur le poids total de la composition, et de préférence de 0,1 % à 1 %. L'utilisation de l'accélérateur de prise permet d'assurer une prise rapide dans l'ensemble des compositions, ainsi que le démoulage de pièces en béton de chanvre à partir de 16h.

Avantageusement, l'invention propose d'utiliser le sulfate de sodium comme accélérateur de prise. Le sulfate de sodium permet de remplacer l'utilisation de carbonate de lithium comme accélérateur de prise efficace dans ce type de composition, et donc d'améliorer l'empreinte écologique et l'impact sanitaire de la composition du liant. Dans un autre mode de réalisation, un accélérateur de prise est rajouté à la composition lors du mélange de la composition de liant à l'eau pour la préparation de béton de granulats végétaux.

En général, les compositions présentent de très bonnes propriétés d'application et ne nécessitent pas de retardateur. Bien entendu, il sera également possible d'utiliser des adjuvants supplémentaires. Par exemple, la composition peut comporter un retardateur tel que l'acide citrique, et un rétenteur tel que l'éther de cellulose. Ces adjuvants sont particulièrement utiles lorsque le liant est mélangé à une faible proportion d'eau, et/ou lors de l'utilisation de ciments sulfo-alumineux. Les compositions peuventainsi être plus facilement mises en place, et le temps de début de prise peut être légèrement retardé. Les adjuvants retardateurs et rétenteurs seront présents dans une concentration en masse sur poids sec de liant de 0.01 % à 1 %, de préférence de 0.05% à 0.2%.

Selon des modes de réalisation préférés, les compositions de l'invention intègrent en masse sèche sur poids total de la composition au moins 70% de chaux hydraulique naturelle, et de préférence au moins 75%, 80% ou 85% de chaux hydraulique naturelle et de 0 à 30% de ciment Portland. Le liant de la composition est donc composé essentiellement de chaux hydraulique naturelle en mélange avec le sulfate de calcium et le ciment alumineux. En effet, cette composition est efficace avec une très faible concentration des adjuvants, notamment un accélérateur de prise dans une concentration d'au moins 0,1% dans la composition.

Les compositions de l'invention garantissent ainsi l'obtention d'un mélange homogène de béton de granulats végétaux préparé au préalable de son application manuelle, ou par projection. Dans ce dernier cas, le liant mélangé à l'eau est conservé dans un récipient séparé, et mélangé aux granulats de chanvre au moment de sa projection. De même, il sera possible de palier aux effets indésirables de l'utilisation de granulats végétaux (retard de la prise et réduction des propriétés mécaniques). La prise rapide de ces matériaux est garantie même à des basses températures.

Avantageusement, les compositions de l'invention permettent d'augmenter la cadence de fabrication de pièces en béton de chanvre, tels que des blocs et des panneaux pour l'isolation des murs. Par exemple, ces éléments pourront être plus rapidement démoulés ou changés de position lors du séchage. De manière similaire, le temps nécessaire à tout processus de construction requérant l'application de ces matériaux peut être optimisé par le liant de l'invention.

Enfin, les propriétés de durcissement des compositions de l'invention permettent la levée des murs préfabriqués en béton de chanvre sans effondrement. D'autre part, les compositions ne nécessitent pas de retardateur, et peuvent être facilement mises en oeuvre sans problème de séchage indésirable et de collage aux outils de travail.

### PARTIE EXPERIMENTALE

### 1. Mélange du liant avec du chanvre et fabrication des éprouvettes en béton de chanvre

Dans une bétonnière, introduire l'eau (30-35L) et le liant (18-25 kg), laisser mélanger 3 à 5 minutes puis ajouter le chanvre (100L) et laisser malaxer afin d'obtenir un mélange homogène.

Des moules cylindriques de dimensions 16*32 cm sont remplis en réalisant trois couches de mortier, compactées manuellement à l'aide d'une dame de 16 cm de large. Après le remplissage, les éprouvettes ainsi formées sont recouvertes par un couvercle en plastique limitant le séchage par contact avec l'air.

Les éprouvettes sont conservées à une température de 20°C et un taux d'humidité relative de 50%. Ce contrôle environnemental contribue à garantir des conditions constantes pendant la période de durcissement du mortier, assurant ainsi la fiabilité des résultats expérimentaux.

### 2. Caractérisation

### 2.1 Caractérisation à 16h : validation de la possibilité de démouler les éprouvettes

- Vérification de la dureté de l'éprouvette et de la possibilité de démouler et conserver la forme.

### 2.2 Caractérisation à 14j : vérification des performances mécaniques à court terme

- Réalisation d'un essai de résistance en compression (Rc 14j).
- Démoulage des éprouvettes sans les casser en deux.

### 2.3 Caractérisation à 90 j : vérification des performances mécaniques à long terme

### 2.4 Réalisation des essais de résistance en compression (Rc 90j).

Ces étapes méthodiques offrent une évaluation complète des propriétés du mortier, du temps de prise à la résistance en compression à différentes échéances.

### 3. Résultats

Le tableau 1 et le tableau 2 ci-après montrent des exemples des formules de liant et leur caractérisation dans des essais avec du chanvre. Les résultats du tableau 1 ont été obtenus avec des formules de liant selon l'invention, le tableau 2 montre des essais comparatifs avec des formules de liant non conformes à l'invention. Toutes les formules 1 à 12 sont constituées d'un mélange de partie A et de partie B auquel on rajoute le sulfate de sodium comme accélérateur de prise. Les pourcentages de chaque composant de la partie A et de la partie B sont indiqués en pourcentage de masse sèche vis-à-vis du poids de ladite partie A et B respectivement. La formule 10 ne contient ni de partie B, ni d'accélérateur de prise. La formule 12 ne comporte pas d'accélérateur de prise. La concentration de sulfate de sodium est exprimée comme pourcentage en masse sèche sur un poids total de la composition de liant. La formule 13 ne contient pas de sulfate de calcium.

**Tableau 1- Caractéristiques des éprouvettes de béton de chanvre avec des propriétés mécaniques conformes, dont les formules 4 à 9 sont des formules selon l'invention.**

| **Composition liant** | **Formule N°** | | **1** | **2** | **3** | **4** | **5** | **6** | **7** | **8** | **9** |
|---|---|---|---|---|---|---|---|---|---|---|---|
| **Partie A** | Ciment Portland (%) | | 41,9 | 36,8 | 38,9 | | | 5,9 | | | |
| | NHL 5 (%) | | | | | | 100 | 94,1 | 100 | 100 | 100 |
| | NHL 3,5 (%) | | 58,1 | 63,2 | 61,1 | 100 | | | | | |
| **Partie B** | Ciment Aluminate de Calcium (CAC) % | | 75,0 | 66,7 | 60,0 | 60,0 | 60,0 | 66,7 | 66,7 | | |
| | CSA (%) | | | | | | | | | 60,0 | 60,0 |
| | Sulfate de calcium (C$) | | 25,0 | 33,3 | 40,0 | 40,0 | 40,0 | 33,3 | 33,3 | 40,0 | 40,0 |
| Ratio massique C$ / CAC ou CSA | | | 0,33 | 0,5 | 0,67 | 0,67 | 0,67 | 0,5 | 0,5 | 0,67 | 0,67 |
| Ratio massique A / B | | | 2,6 | 4 | 3,4 | 4,7 | 5,7 | 5,7 | 4,8 | 6,7 | 7,9 |
| Sulfate de sodium % | | | 0,4 | 0,4 | 0,4 | 0,2 | 0,2 | 0,2 | 0,2 | 0,2 | 0,2 |

| **Béton de chanvre** | | **Cible** | **Résultat** | | | | | | | | |
|---|---|---|---|---|---|---|---|---|---|---|---|
| Performances | Démoulage à 16h | Oui | Oui | Oui | Oui | Oui | Oui | Oui | Oui | Oui | Oui |
| | Démoulage à 14j | Oui | Oui | Oui | Oui | Oui | Oui | Oui | Oui | Oui | Oui |
| | Rc 14j (MPa) | >1 | | | | 1 | 1 | | | | 1 |
| | Rc 90j (MPa) | >1,2 | 1,5 | 1,5 | 1,7 | 1,2 | 1,2 | 1,2 | 1,2 | 1,4 | 1,2 |

Comme démontré dans les essais, le mélange de la partie A avec la partie B permet d'optimiser les performances mécaniques des matériaux en béton de chanvre en absence de ciment Portland (formules 4, 5, et 7 à 9), ou à des très faibles concentrations (formule 6). Les performances mécaniques sont notamment optimisées avec un ratio massique A/B de 2,6 à 8. Un ratio massique A/B de 4 à 6 est préféré lorsque la formule comporte au moins 80% en masse sèche total de NHL complété essentiellement avec le mélange CAC/ C$. De même, la possibilité de démouler les pièces après 16h montre qu'un ratio massique C$ / CAC ou CSA de 0,3 à 0,7 permet d'optimiser le temps de prise et de durcissement des matériaux, notamment en présence d'un accélérateur de prise, de préférence de 0,5 et 0,7.

**Tableau 2- Caractéristiques des éprouvettes de béton de chanvre obtenues avec des formules de liant non conformes à l'invention.**

| **Composition liant** | **Formule N°** | | **10** | **11** | **12** | **13** |
|---|---|---|---|---|---|---|
| **Partie A** | Ciment Portland (%) | | 53,0 | 33,7 | 41,8 | 68.3 |
| | NHL 5 (%) | | | | | |
| | NHL 3,5 (%) | | 47,0 | 66,3 | 58,2 | 31.7 |
| **Partie B** | Ciment Aluminate de Calcium (CAC) % | | | 59,6 | 75,0 | |
| | CSA (%) | | | | | 100 |
| | Sulfate de calcium (C$) | | | 40,4 | 25,0 | |
| C$ / CAC ou CSA | | | | 0,68 | 0,33 | |
| Ratio A / B | | | | 8,2 | 2,6 | 2,43 |
| Sulfate de sodium | | | | 0,2 | | 0.44 |

| **Béton de chanvre** | | Cible | Résultat | | | |
|---|---|---|---|---|---|---|
| Performances | Démoulage à 16h | Oui | Non | Non | Non | Non |
| | Démoulage à 14j | Oui | Oui | Non | Oui | Non |
| | Rc 14j (MPa) | >1 | 1 | | - | |
| | Rc 90j (MPa) | >1,2 | 1,2 | | - | |

L'exemple 10 montre l'effet de l'absence de partie B dans une composition de liant, cette dernière ne permet pas la prise et durcissement rapide des matériaux de béton de chanvre. Les performances mécaniques sont toutefois assurées par la haute concentration en ciment Portland. La formule 11 montre l'importance du ratio massique A/B pour l'obtention des résultats satisfaisants des propriétés mécaniques à jeune âge et la prise et durcissement rapide (démoulage à 16h). Pour cette dernière formule, les performances mécaniques sont développées trop lentement et la composition est écartée. L'exemple 12 montre l'effet de l'absence de sulfate de sodium comme accélérateur de prise. L'exemple 13 montre l'effet de l'absence de sulfate de calcium. Même dans le cas de l'utilisation d'un ciment sulfo-alumineux (CSA) comme source de ciment alumineux, et avec un taux relativement élevé de sulfate de sodium, l'absence d'un ajout complémentaire de sulfate de calcium est préjudiciable pour un démoulage à 16h ou à 14j.

## Revendications

1. Composition de liant hydraulique pour des bétons ou mortiers de granulats végétaux comprenant :
- une première partie dite « A » de liant hydraulique comportant en masse sèche au moins 75% de chaux hydraulique naturelle sur un poids total de ladite partie A, et
- une deuxième partie dite « B » constituée d'un mélange de sulfate de calcium et de ciment alumineux,
et dans laquelle la partie A représente au moins 70% en masse sèche sur un poids total de la composition de liant.

2. Composition de liant hydraulique selon la revendication 1, dans laquelle un ratio massique « A/B » est compris entre 2,3 et 8.

3. Composition de liant hydraulique selon la revendication 2, dans laquelle un ratio massique « A/B » est compris entre 4 et 6.

4. Composition de liant hydraulique selon l'une des revendications précédentes, dans laquelle un ratio massique de sulfate de calcium/ciment alumineux dans la partie B est compris entre 0,3 et 0,7.

5. Composition de liant hydraulique selon l'une des revendications précédentes, dans laquelle la composition comporte un adjuvant accélérateur de prise choisi parmi un sel métallique alcalin tel que le carbonate de lithium, le sulfate de lithium, le carbonate de sodium, le sulfate de sodium, le sulfate de potassium, et le carbonate de potassium.

6. Composition de liant hydraulique selon la revendication 5, dans laquelle l'accélérateur de prise est le sulfate de sodium.

7. Composition de liant hydraulique selon l'une des revendications précédentes, dans laquelle la partie A est constituée en masse sèche d'au moins 85% de chaux hydraulique naturelle et de 0 à 15 % de ciment Portland sur le poids total de ladite partie A, et de préférence d'au moins 90% de chaux hydraulique naturelle et de 0 à 10% de ciment Portland.

8. Composition de liant hydraulique selon la revendication 1, dans laquelle
- la partie A est constituée en masse sèche d'au moins 90% de chaux hydraulique naturelle, et de 0 à 10% de Ciment Portland sur le poids total en masse sèche de ladite première partie, et représente de préférence au moins 80% en masse sèche sur le poids total de la composition de liant,
- dans la partie B constituée du mélange de sulfate de calcium et de ciment alumineux, le ciment alumineux est choisi parmi un ciment d'aluminate de calcium (CAC), un ciment sulfo-alumineux (CSA) ou un mélange de ces derniers, et
dans laquelle le ratio massique A/B est compris entre 4 et 8, de préférence entre 4 et 6, et le ratio massique de sulfate de calcium/ciment alumineux est compris entre 0,3 et 0,7, et ladite composition comprends un adjuvant accélérateur de prise choisi parmi un sel métallique alcalin.

9. Composition de liant hydraulique selon l'une des revendications précédentes, dans laquelle la chaux hydraulique naturelle est choisie parmi la NHL3,5, la NHL 5 ou un mélange de ces dernières.

10. Composition de liant selon l'une des revendications précédentes, ledit liant étant mélangé à l'eau dans un rapport massique de 0,5 à 1,5, de préférence de 1 à 1,5.

11. Composition de béton, mortier ou enduit comportant une composition de liant hydraulique selon l'une des revendications précédentes et des granulats végétaux, tels que des granulats de chanvre, de lin, de miscanthus et du colza.

12. Procédé de fabrication d'un matériau composite, comportant :
- une étape de préparation d'une composition de liant selon l'une des revendications 1 à 9 mélangé à l'eau dans un rapport massique de 0,5 à 1,5, et intégrant de 15 à 80% en masse d'un granulat végétal par rapport à la masse sèche totale de la composition de liant.
